# EUROPEAN PATENT SPECIFICATION

(11) **EP 1 699 301 B1**
(45) Date of publication and mention of the grant of the patent: **10.09.2008**
(21) Application number: 03819184.7
(22) Date of filing: 30.12.2003
(51) Int. Cl.: A23L 1/19, A21D 13/00, A23G 3/00, A23D 9/007

(54) **CREAM FILLER COMPOSITION, METHOD FOR PREPARING SUCH A CREME FILLER COMPOSITION AND FOOD COMPRISING SUCH A CREME FILLER COMPOSITION**
CREMEFÜLLUNG-PRODUKT, VERFAHREN ZU SEINER HERSTELLUNG UND LEBENSMITTEL, WELCHE DIESES CREMEFÜLLUNG-PRODUKT ENTHALTEN
COMPOSITION DE REMPLISSAGE DE CREME, PROCEDE DE PREPARATION CORRESPONDANT ET ALIMENTS COMPRENANT CETTE COMPOSITION DE REMPLISSAGE DE CREME

(43) Date of publication of application: 13.09.2006
(73) Proprietor: Syral Belgium NV, 9300 Aalst (BE)
(72) Inventor: LANDAZURI, Thomas, B-9300 Aalst (BE)
(74) Representative: Ostyn, Frans
(86) International application number: PCT/EP2003/014985
(87) International publication number: WO 2005/063049

(56) References cited:
- EP-A- 1 254 605
- WO-A-03/024253
- US-A- 3 030 211
- US-A- 4 711 788
- US-A- 4 834 991
- US-A- 4 865 859
- PATENT ABSTRACTS OF JAPAN vol. 1998, no. 12, 31 October 1998 (1998-10-31) & JP 10 179048 A (ASAMA KASEI KK), 7 July 1998 (1998-07-07)

## Description

The invention relates to a cream filler composition, a method for preparing such a cream filler composition and food compositions comprising such a cream filler composition.

Cream filler compositions for sandwich cookies are generally composed of sucrose, or sucrose in combination with other sweeteners, flavourings, and oils or fats. These oils, fats or oil/fat mixtures (hereafter called oleaginous compositions) are very important with regard to the organoleptic properties of the cream, but also towards texture and storage stability.

In order to obtain these properties, these oleaginous compositions are formulated by combining different fats and oils, which have been wholly or partially hydrogenated. As a result thereof, the oleaginous component of the cream filling comprises an increased quantity of saturated fatty acids in combination with trans-fatty acids. Typical examples of such cream fillings are described in US 3,244,536, US 4,834,991, US 4,753,812 or US 4,865,859.

In US 3,244,536, a filler fat composition is described which is obtained by a combination of a component A which is a partially hydrogenated fat with a high content of C₁₈ fatty acid, and with component B which is a vegetable oil containing a high proportion of lauric acid. The blend is then subjected to interesterification. As the starting material for component A, any animal fat or vegetable oil may be used as long as it contains at least 50 % of C₁₈ acid. As component B, any vegetable oil which contains lauric acid may be used. Coconut oil and palm kernel oil are satisfactory. This filler fat composition shows a short plastic range, that is, a wide temperature range over which the fat is soft workable and yet is in the solid state.

In US 4,834,991, a filler cream containing soybean oil is disclosed which has an improved "get away" property resulting in a rapid burst of flavor when consumed. The filler cream ingredients are mixed, aerated, and cooled simultaneously to obtain a specific gravity of between about 0.85 and about 1.20. The resulting filler cream is utilized as a filler for sandwich cookies or other baked goods.

In US 4,753,812, there is disclosed a sandwich cream filling composition comprising a fat matrix consisting essentially of a plastic fat of defined SFI profile and melt point and a hard butter also of defined SFI profile and melt point. The composition is characterized as having good stand-up throughout a wide temperature range from about 10 °C to about 32 °C and an imperceptible solids content at temperatures above about 37 °C.

In US 4,865,859, a filler cream is described for use with sandwich cookies and other foods which is soft at room temperature and which is yet structurally stable during simulated adverse transport conditions. This filler cream is obtained with an oleaginous composition having a solid fat index of: (a) from about 9 to about 20 percent, preferably from about 11 percent to about 15 percent, at 80 degrees F., (b) from about 4 percent to about 11 percent, preferably from about 5 percent to about 8 percent at 92 degrees F., and (c) from about 1 percent to about 4 percent preferably from about 1 percent to about 3 percent material at 100 degrees F. The ingredients are aerated, mixed, and cooled simultaneously to produce a composition which has a specific gravity of from about 0.70 to about 1.20, preferably from about 0.77 to about 1.0, most preferably from about 0.85 to about 0.95.

The products which are used as a stiffener ingredient in the abovementioned US patent applications, such as non-fat dry milk or soy protein, are effective in increasing plastic and yield values of the filler composition, at higher temperatures. However, these filler fat compositions comprise saturated and/or partially hydrogenated fats.

Attempts to reduce fat content and/or caloric content in cream fillings were already undertaken, as shown in the patent literature related to that subject.

For instance, in the example of GB 1 458 568, cream fillings are disclosed containing 22 % water, 45 % sugar and 33 % shortening. This shortening contains an emulsifier system allowing the preparation of stable cream fillings containing an important amount of water.

The cream filling composition disclosed in EP 827 693 is in a substantially non-emulsified form, and is composed of 10-20 % water, 30-60 % fats, milk protein and sugar. Thereby the fat fraction is characterised by a solid content of >= 8 % at 30°C.

However, the presence of too much water in cookie cream fillings can cause the cookies to become soggy and lose crunchiness.

In DD 285 469, reduced fat cream fillings are described, composed of an aqueous mixture of sugar and thickener, combined with a fat component.

In US 5,939,127, a low fat cream filling is described whereby the fat component is replaced by a fat replacer composition, in combination with glycerol. This fat replacer is an aqueous mixture of an emulsifier and inulin.

In US 5,626,903, fat reduction is realised by using an emulsifier system thereby reducing fat content to at least below 16%.

An anhydrous reduced fat filler composition is disclosed in US 5,612,078, thereby replacing part of the fat with a polyol (glycerol) and a particular emulsifier.

In all the documents cited above, saturated and/or partially hydrogenated oleaginous compositions are part of the formulations.

Therefore, it would be highly desirable that substantially all saturated and/or partially hydrogenated fats are replaced by unsaturated or poly-unsaturated fats or oils. In addition, the solutions of the prior art all have one or more shortcomings with regard to nutritional, organoleptic, functional, economical and/or process-related characteristics.

Therefore, the purpose of the invention is to provide cream filler compositions, substantially free of saturated fats and free of partially hydrogenated fats, containing almost exclusively natural vegetable oils having high contents of unsaturated and/or poly-unsaturated fatty acids, but in which
- the cream fillings should retain consistency at room temperature and provide good organoleptic properties when consumed;
- the fillings must have good whipping and creaming properties, so as to impart to the filler cream a light and consistent texture upon whipping and aeration;
- the cream filler composition should have good shelf storage properties.

With substantially free of saturated fats and free of partially hydrogenated fats is meant:
- a saturated fat fraction representing between 0 % and 5 % w/w of the total lipid fraction; and
- a partially hydrogenated fat fraction representing between 0 % and 1 % w/w of the total lipid fraction,

With natural vegetable oils there is meant vegetable oils that were not submitted to partial hydrogenation, thereby showing a SFI (solid fat index) of about 0 (zero) at room temperature (25 ° C).

The purpose of the invention is achieved by providing a cream filler composition which comprises:
- a lipid fraction composed of a vegetable oil having a SFI of 0 at room temperature, a saturated fat fraction representing between 0 % and 5 % w/w of
- a saturated fat fraction representing between 0 % and 5 % w/w of the total lipid fraction; and
- a partially hydrogenated fat fraction representing between 0 % and 1 % w/w of the total lipid fraction,

With natural vegetable oils there is meant vegetable oils that were not submitted to partial hydrogenation, thereby showing a SFI (solid fat index) of about 0 (zero) at room temperature (25 ° C).

The purpose of the invention is achieved by providing a cream filler composition which comprises:
- a lipid fraction composed of a vegetable oil having a SFI of 0 at room temperature, a saturated fat fraction representing between 0 % and 5 % w/w of the total lipid fraction and a partially hydrogenated fat fraction representing between 0 % and 1 % w/w of the total lipid fraction,
- a powder sweetener composition,
- and a wheat gluten fraction comprising a gliadin-rich fraction wherein the gliadin/glutenin ratio is at least 2, as determined by means of the solvent fractionation method.

In a preferred cream filler composition according to the invention, the cream filler composition comprises:
- from 25 - 60 % by weight of a lipid fraction composed of a vegetable oil having a SFI of 0 at room temperature, a saturated fat fraction representing between 0 % and 5 % w/w of the total lipid fraction and a partially hydrogenated fat fraction representing between 0 % and 1 % w/w of the total lipid fraction;
- from 40 to 70 % by weight of a powder sweetener composition;
- and from 1 to 15 % by weight of a wheat gluten fraction comprising a gliadin-rich fraction wherein the gliadin/glutenin ratio is at least 2, as determined by means of the solvent fractionation method.

More preferably, the cream filler composition according to the invention comprises:
- from 30 - 50 % by weight of a lipid fraction composed of a vegetable oil having a SFI of 0 at room temperature, a saturated fat fraction representing between 0 % and 5 % w/w of the total lipid fraction and a partially hydrogenated fat fraction representing between 0 % and 1 % w/w of the total lipid fraction;
- from 45 to 65 % by weight of a powder sweetener composition;
- and from 3 to 12 % by weight of a wheat gluten fraction comprising a gliadin-rich fraction wherein the gliadin/glutenin ratio is at least 2, as determined by means of the solvent fractionation method.

In an advantageous embodiment of a cream filler composition according to the invention, the powder sweetener composition comprises one or more carbohydrate-based sweeteners.

In another advantageous embodiment of a cream filler composition according to the invention, the powder sweetener composition comprises one or more high intensity sweeteners.

In still another advantageous embodiment of a cream filler composition according to the invention, the powder sweetener composition comprises a combination of one or more carbohydrate-based sweeteners and high intensity sweeteners.

The wheat gluten fraction of the cream filler composition according to the invention comprises more preferably a gliadin-rich fraction wherein the gliadin/glutenin ratio is at least 2,5 and most preferably at least 3, as determined by means of the solvent fractionation method.

In a preferred embodiment of a cream filler composition according to the invention, the wheat gluten fraction is obtained by means of the following method:
the gluten are dispersed continuously or not in water up to a dry substance varying between 5 and 30 %, by which

In another possibility, the batch-wise preparation is performed by first mixing the gliadin-rich fraction with the oil and then adding the powder sweetener while mixing until homogenenous.

In a second preferred method for preparing a cream filler composition according to the invention, the cream filler composition is prepared in a continuous way.

The continuous preparation is for instance performed by continuously dosing the powder sweetener, the gliadin-rich fraction and the oil in a continuous mixing unit.

Further distinctive features and characteristics will be clarified in the following description and the following examples, which should be considered as being no restriction in the general scope of the invention as that appears from the above description and from the claims at the end of this text.

The cream filling composition of the invention is characterised in that it comprises:
- a lipid fraction composed of a vegetable oil having a SFI of 0 at room temperature, and a saturated fat fraction representing between 0 % and 5 % w/w of the total lipid fraction,
- a powder sweetener composition,
- and a wheat gluten fraction having an increased gliadin content, compared to the natural gliadin content in wheat gluten.

The powder sweetener composition typically comprises one or more carbohydrate-based sweeteners, but may also contain high intensity sweeteners.

The most important vegetable oils that can be used in these cream filling compositions are a.o., (but not limited to) soybean oil, maize oil, sunflower oil, rapeseed oil, canola oil, peanut oil, cottonseed oil, olive oil, and safflower oil.

The powdered sweetener composition may comprise a powder of a.o. sucrose, dextrose, fructose, maltitol, sorbitol, isomaltitol, lactitol, xylitol, erythritol, mannitol, polydextrose, tagatose, maltodextrine, hydrogenated or non-hydrogenated starch hydrolysates, hydrogenated maltodextrine or a mixture of two or more of these products.

These carbohydrate-based sweeteners can further be combined with a high intensity sweetener such as e.g. aspartame, acesulfam K, saccharin, cyclamate, alitame, sucralose, stevioside, neohesperidine, etc.

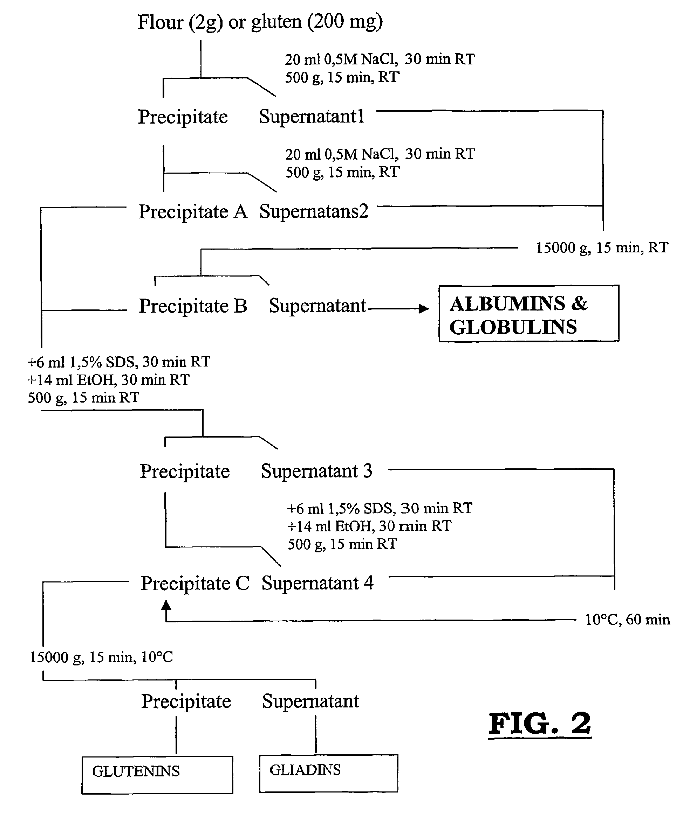

The wheat gluten fraction typically comprises a gliadin-rich fraction wherein the gliadin/glutenin ratio is at least 2, as determined by means of the "solvent fractionation" method as disclosed in WO 03/013266 (see fig. 2).

More preferably the gliadin/glutenin ratio in the wheat gluten fraction is at least 2,5 and most preferably at least 3.

This solvent fractionation method uses the different solubility characteristics of the wheat protein classes in different solvents to separate gliadins, glutenins and albumins and globulins. Distribution of protein in the different solvents is quantified by Kjeldahl analysis.

### Equipment

■ Polypropylene centrifuge tubes of 40 ml
■ Centrifuge (able to spin at *15000 g*)
■ Analytical balance
■ 0.5M NaCl
■ 1.5% SDS solution
■ 95% Ethanol
■ Incubation chamber at 10°C
■ Kjeldahl apparatus
■ Kjeldahl tablets
■ For 300 ml tubes: type CT (5g K₂SO₄ + 0.15g CuSO₄.5H₂O + 0.15g TiO₂).
■ For 100 ml tubes: type CTQ (1,5g K₂SO₄ + 0.045g CuSO₄.5H₂O + 0.045g TiO₂).

### Procedure

The extraction procedure is outlined in figure 2. All extractions are for 30 min at room temperature.
■ Weigh a sample in a PP-centrifuge tube of +/- 40 ml. For flour 2.000 g, for gluten 200 mg, for process samples the amount corresponding to +/- 150 - 160 mg of protein.
■ Add 20 ml 0.5M NaCl. Stir for 30 min at room temperature (RT). After extraction, centrifuge at *500 g* for 15 min at RT. Carefully decant the supernatant in a clean PP-tube. Add another 20 ml of 0.5M NaCl to the residue (precipitate A) and repeat the extraction and centrifugation. Combine this second supernatant with the first and then centrifuge at *15000 g* for 15 min at RT. The supernatant contains the albumins and globulins.
■ To the residue (precipitate B) is added 6 ml 1.5% SDS solution. The mixture is homogenised and combined with precipitate A. Extraction is for 30 min at RT. 14 ml of absolute ethanol is then added dropwise and the mixture is stirred for another 30 min at RT. After centrifugation at RT for 15 min at *500 g*, a precipitate and supernatant 3 are obtained. This complete procedure is repeated on the obtained precipitate, yielding precipitate C and supernatant 4.
■ Supernatants 3 and 4 are combined in a small beaker and kept in an incubation chamber at 10 °C for 60 min. A fine precipitate forms and this mixture is then poured into the centrifuge tube containing precipitate C. The mixture is immediately transferred to the centrifuge and spun at *15000 g* for 15 min at 10 °C. This yields a supernatant containing gliadins and a precipitate containing glutenins.

### Kjeldahl determination

The solutions containing the albumins/globulins and gliadins (+/- 40 ml) are quantitatively transferred to destruction flasks (750 ml). A tablet, 14 ml of concentrated sulphuric acid and 3 drops of octanol (antifoam) are added and samples are destroyed for 90min (untill clear). The concentrate (about 15 ml) is transferred to a Kjeldahl tube and nitrogen is determined as described in Amylum method 0701.
The glutenin fraction is freeze dried and nitrogen content is determined as in dry products.

Results are reported as the amount of protein found in the different classes and expressed as a percentage of the recovered protein.

Thereby it is desirable that the above cited wheat gluten fractions are obtained by means of a process as disclosed in WO 03/013266, i.e.
the gluten are dispersed continuously or not in water up to a dry substance varying between 5 and 30 %, by which
- the pH of the dispersion is monitored between 4,4 and 4,8, and
- the gluten - water mixture is submitted to shearing actions,
through which the dispersion, continuously or not, can be fractionated in gliadin- and glutenin-rich fractions, by which a single gliadin-rich fraction with a gliadin/glutenin ratio of at least 2,5 is obtained, and a single glutenin-rich fraction with a gliadin/glutenin ratio of less than 0,8 is obtained.

In an advantageous aspect of the invention the cream filler composition is characterised in that it comprises:
- from 25-60% by weight of a lipid fraction composed of a vegetable oil having a SFI of 0 at room temperature, and a saturated fat fraction representing 0-5% by weight of the total lipid fraction
- from 40 to 70% by weight of a powder sweetener composition,
- and from 1 to 15% by weight of a wheat gluten fraction having an increased gliadine content, compared to the natural gliadine content of wheat gluten.

In a more advantageous aspect of the invention the cream filler composition is characterised in that it comprises:
- from 30-50% by weight of a lipid fraction composed of a vegetable oil having a SFI of 0 at room temperature, and a saturated fat fraction representing 0-5% by weight of the total lipid fraction,
- from 45 to 65% by weight of a powder sweetener composition,
and from 3 to 12% by weight of a wheat gluten fraction having an increased gliadin content, compared to the natural gliadin content of wheat gluten.

The products according to the invention can be prepared batch-wise or in a continuous way.

In a batch-wise process, the gliadin-rich fraction can be first mixed with the sweetener powder. Then the oil can be added while mixing continuously until a homogeneous viscous cream is obtained.
Alternatively, the gliadin-rich fraction is first mixed with the oil, and then the sweetener compound is added, while mixing until homogeneous.

A continuous method comprises e.g. continuous dosing of sweetener, gliadin-rich product and oil into a continuous mixing unit. (e.g., but not limited to Lödige-type, VOMM-type, or Denissen-type mixers)

The thus obtained compositions do show a number of mechanical properties making them very suitable as cream fillers for sandwich cookies. Important properties are consistency at room temperature and "melt" behaviour at body temperature, in combination with a light and consistent texture. Furthermore, shelf stability is also very important.
Another advantage of the process according to the invention relates to the fact that, in contrast to the existing state of the art processes, such as described in US 4,753,812 and US 4,834,991 (as mentioned in documents of the state of the art), there is no longer a need for a heating and cooling/crystallisation step to obtain cream filler compositions for e.g. sandwich cookies or layered wafer cookies.

The invention also pertains to food compositions containing the cream filler of the invention. Typical representatives are e.g. sandwich cookies or layered wafer cookies.

### EXAMPLES:

### Example 1-2:

In the following examples, cream filler compositions according to the invention are compared with compositions containing protein ingredients other than the high gliadin wheat gluten fractions (hereafter called gliadins). Cream filler functional properties such as consistency of texture and storage stability are determined respectively, as the compression force measured by means of a texture analyser, and oil leaching in function of time.

In the following table 1a and 1b, several compositions are described containing different types of proteins. Table 1a discloses compositions with standard formulations. These standard formulations are based on two literature sources:
- information of Kraft General Foods, for instance the Oreo Cookies;
- booklet "Secondary processing in biscuit manufacturing" by Duncan Manley, date 1998, chapter 6 "Cream sandwiching". On page 43 is stated that it is usual to use a recipe which has around 30 % fat in the cream, but levels as low as 20 % and as high as 45 % will be found.

Table 1b is concerned with analogous compositions in comparison with these Oreo Cookies, but containing the gliadin enriched fraction according to the invention. Quantities mentioned are in parts by weight.

**Table 1a: Cream filler compositions with standard formulations**

| *Ingredients* | *Comp*.*Ex*.*1* | *Comp*.*Ex*.*2* | *Comp*.*Ex*.*3* | *Comp*.*Ex*.*4* |
|---|---|---|---|---|
| Soy oil | 34 | 34 | 36 | 34 |
| Gluten | - | - | - | 6 |
| Caseinate | 6 | - | - | - |
| Soy isolate | - | 6 | - | - |
| Icing sugar | 60 | 60 | 64 | 60 |

**Table 1b: Cream filler compositions (part of the invention)**

| *Ingredients* | *Example 1* | *Example 2* |
|---|---|---|
| Soy oil | 34 | - |
| Olive oil | - | 34 |
| Gliadins | 6 | 6 |
| Icing sugar | 60 | 60 |

The cream filler compositions are prepared as follows:
Icing sugar and protein ingredients are first dry mixed in a Kenwood mixer equipped with a K beater. Then all the oil is added at once. During the first 15 seconds mixing is performed at low speed. During the following 3 minutes the ingredients are mixed at maximum speed.

The thus obtained cream filler compositions are then compared with commercial cream filler compositions containing saturated and/or partially hydrogenated fats/oils.

The commercial cream fillers were obtained by recovering the cream filler material present between the cookies of three commercial products: Oreo's, Prince-LU and Frou Frou wafers.

Following tests were performed in order to compare these different formulations:

### - Texture analysis:

The cream fillers prepared are put in a small cup having the dimensions of 12 mm high and a diameter of 5,4 cm. The sample is conditioned at least for one hour at the temperature at which it is measured (room temperature). A cylindric probe of 5 mm diameter is displaced at a speed of 1 mm/sec over a distance of 5 mm into the cream filler. Thereby the compression force (in g) is measured as an indicative value for texture consistency.

### - Oil retention stability:

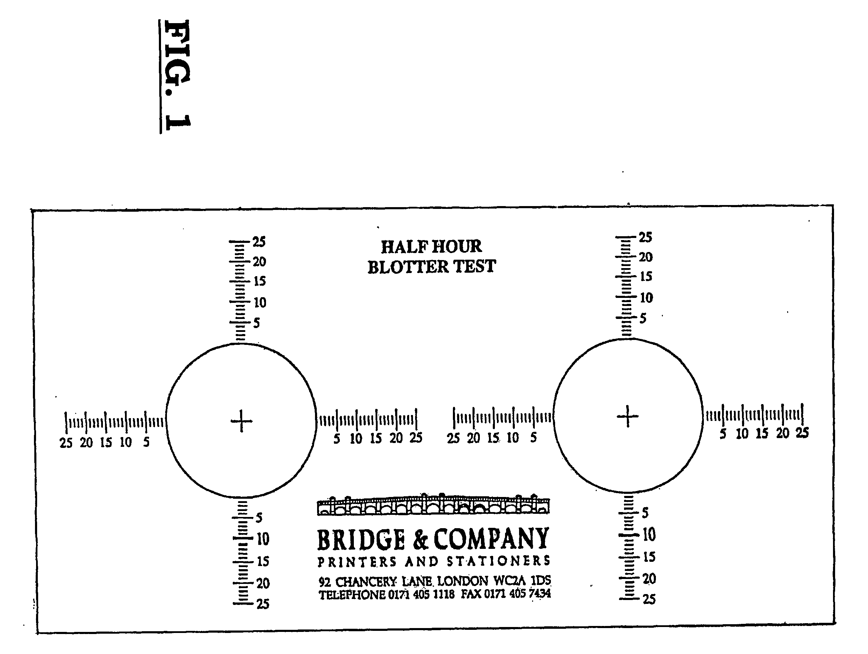

On a silicon paper a layer of cream filler is spread, the height being 2 mm. With a sharp edged cylinder of 32,2 mm diameter a disc is cut out and placed in the centre of a synergy paper. (Half hour Blotter test paper, Bridge & Company, printers & stationers)(see fig. 1) Then the paper containing the cream filler is stored at 25°C and the spreading of oil is measured at specific times. The spreading of oil is determined as the average value of spreading in the four directions. Oil spreading is thereby inversely related to storage stability.

Table 2 comprises data on compression force of the cream fillers as well as data on oil spreading in function of time. Values of commercial fillings are compared with the product compositions of table 1a and 1b.

**Table 2: Texture consistency and storage stability of cream filling compositions**

| | | Oil spreading in mm | |
|---|---|---|---|
| *Filling comp.* | *Compression force* (*in g*) | *1 day 25°C* | *7 days 25°C* |
| Oreo | 287 | 5 | 15 |
| Prince LU | 42 | 6 | 15 |
| Frou Frou | 20 | 8 | 20 |
| Comp.Ex.1 | NM (1) | 10 | 25 |
| Comp.Ex.2 | NM (1) | 10 | 27 |
| Comp.Ex.3 | NM (1) | 10 | 21 |
| Comp.Ex.4 | NM (1) | 16 | 27 |
| Ex. 1 | 52 | 8 | 18 |
| Ex. 2 | 63 | 10 | 17 |

| | | | |
|---|---|---|---|
| (1): No compression value could be determined. | | | |

The comparative examples 1 to 4, containing soy isolate, caseinate, and wheat gluten or no protein, do not provide a consistent texture. They are not storage-stable over longer periods as show by the oil retention test, also.
The examples 1 and 2 according to the invention provide stable consistent cream filler compositions, this on the basis of liquid, unsaturated oils.

### Examples 3-7:

In this series of examples according to the invention, a number of formulations, showing a variable sugar, oil and protein content, are tested. The composition of the cream fillings is provided in table 3 while consistency values and storage stability values are disclosed in table 4.

**Table 3: Cream filler compositions**

| Ingredients | Example 3 | Example 4 | Example 5 | Example 6 | Example 7 |
|---|---|---|---|---|---|
| Soy oil | 27 | 34 | 40 | 31 | 37 |
| Gliadins | 3 | 6 | 10 | 4 | 8 |
| Icing sugar | 70 | 60 | 50 | 65 | 55 |

The above formulations were tested by means of the same testing methods and under the same testing conditions as the compositions disclosed in the examples 1-2.

**Table 4: Texture consistency and storage stability of cream filling compositions**

| | | Oil spreading in mm | |
|---|---|---|---|
| *Filling comp.* | *Compression force (in g)* | *1 day 25°C* | 7 *days 25°C* |
| Example 3 | 194 | 5 | 15 |
| Example 4 | 64 | 10 | 18 |
| Example 5 | 69 | 10 | 20 |
| Example 6 | 91 | 8 | 15 |
| Example 7 | 52 | 10 | 22 |

From the above it is clear that different consistencies can be obtained as a function of the filler composition.

Also, storage stability comparable to the stability of the commercial formulations could be obtained using the formulations of the invention.

## Claims

1. Cream filler composition, **characterised in that** it comprises:
- a lipid fraction composed of a vegetable oil having a SFI of 0 at room temperature, a saturated fat fraction representing between 0 % and 5 % w/w of the total lipid fraction and a partially hydrogenated fat fraction representing between 0 % and 1 % w/w of the total lipid fraction,
- a powder sweetener composition,
- and a wheat gluten fraction comprising a gliadin-rich fraction wherein the gliadin/glutenin ratio is at least 2, as determined by means of the solvent fractionation method.

2. Cream filler composition according to claim 1, **characterised in that** it comprises:
- from 25 - 60 % by weight of a lipid fraction composed of a vegetable oil having a SFI of 0 at room temperature, a saturated fat fraction representing between 0 % and 5 % w/w of the total lipid fraction and a partially hydrogenated fat fraction representing between 0 % and 1 % w/w of the total lipid fraction;
- from 40 to 70 % by weight of a powder sweetener composition;
- and from 1 to 15 % by weight of a wheat gluten fraction comprising a gliadin-rich fraction wherein the gliadin/glutenin ratio is at least 2, as determined by means of the solvent fractionation method.

3. Cream filler composition according to claim 2, **characterised in that** it comprises:
- from 30 - 50 % by weight of a lipid fraction composed of a vegetable oil having a SFI of 0 at room temperature, a saturated fat fraction representing between 0 % and 5 % w/w of the total lipid fraction and a partially hydrogenated fat fraction representing between 0 % and 1 % w/w of the total lipid fraction;
- from 45 to 65 % by weight of a powder sweetener composition;
- and from 3 to 12 % by weight of a wheat gluten fraction comprising a gliadin-rich fraction wherein the gliadin/glutenin ratio is at least 2, as determined by means of the solvent fractionation method.

4. Cream filler composition according to any one of the preceding claims, **characterised in that** the powder sweetener composition comprises one or more carbohydrate-based sweeteners.

5. Cream filler composition according to any one of the claims 1 to 3, **characterised in that** the powder sweetener composition comprises one or more high intensity sweeteners.

6. Cream filler composition according to any one of the claims 1 to 3, **characterised in that** the powder sweetener composition comprises a combination of one or more carbohydrate-based sweeteners and high intensity sweeteners.

7. Cream filler composition according to any one of the claims 1 to 6, **characterised in that** the wheat gluten fraction comprises a gliadin-rich fraction wherein the gliadin/glutenin ratio is at least 2,5 as determined by means of the solvent fractionation method.

8. Cream filler composition according to claim 7, **characterised in that** the wheat gluten fraction comprises a gliadin-rich fraction wherein the gliadin/glutenin ratio is at least 3, as determined by means of the solvent fractionation method.

9. Cream filler composition according to any one of claims 1 to 8, **characterised in that** the wheat gluten fraction is obtained by means of the following method:
the gluten are dispersed continuously or not in water up to a dry substance varying between 5 and 30 %, by which
• the pH of the dispersion is monitored between 4,4 and 4,8, and
• the gluten - water mixture is submitted to shearing actions,
through which the dispersion, continuously or not, can be fractionated in gliadin- and glutenin-rich fractions, by which a single gliadin-rich fraction with a gliadin/glutenin ratio of at least 2,5 is obtained, and a single glutenin-rich fraction with a gliadin/glutenin ratio of less than 0,8 is obtained.

10. Method for preparing a cream filler composition according to any one of the preceding claims, **characterised in that** the cream filler composition is prepared batch-wise.

11. Method according to claim 10, **characterised in that** the batch-wise preparation is performed by first mixing the gliadin-rich fraction with the powder sweetener and then adding oil while mixing continuously until a homogeneous viscous cream is obtained.

12. Method according to claim 10, **characterised in that** the batch-wise preparation is performed by first mixing the gliadin-rich fraction with the oil and then adding the powder sweetener while mixing until homogenenous.

13. Method for preparing a cream filler composition according to any one of the claims 1 to 9, **characterised in that** the cream filler composition is prepared in a continuous way.

14. Method according to claim 13, **characterised in that** the continuous preparation is performed by continuously dosing the powder sweetener, the gliadin-rich fraction and the oil in a continuous mixing unit.

15. Food compositions comprising a cream filler composition according to any one of the claims 1 to 9.

## Patentansprüche

1. Cremefüllungszusammensetzung **dadurch gekennzeichnet, dass** sie umfasst:
- eine Lipidfraktion zusammengesetzt aus einem Pflanzenöl mit einem SFI von 0 bei Raumtemperatur, einer gesättigten Fettfraktion, welche zwischen 0 % und 5 % w/w der Gesamtlipidfraktion darstellt und einer teilweise hydrierten Fettfraktion, welche zwischen 0 % und 1 % w/w der Gesamtlipidfraktion darstellt,
- eine Pulversüßstoffzusammensetzung,
- und eine Weizenglutenfraktion umfassend eine Gliadin-reiche Fraktion, wobei das Gliadin/Glutenin-Verhältnis wenigstens 2 ist, wie es mittels des Lösungsmittelfraktionierungsverfahrens bestimmt wird.

2. Cremefüllungszusammensetzung nach Anspruch 1, **dadurch gekennzeichnet, dass** sie umfasst:
- von 25 - 60 Gew.-% eine Lipidfraktion zusammengesetzt aus einem Pflanzenöl mit einem SFI von 0 bei Raumtemperatur, einer gesättigten Fettfraktion, welche zwischen 0 % und 5 % w/w der Gesamtlipidfraktion darstellt und einer teilweise hydrierten Fettfraktion, welche zwischen 0 % und 1 % w/w der Gesamtlipidfraktion darstellt;
- von 40 bis 70 Gew.-% eine Pulversüßstoffzusammensetzung;
- und von 1 bis 15 Gew.-% eine Weizenglutenfraktion umfassend eine Gliadin-reiche Fraktion, wobei das Gliadin/Glutenin-Verhältnis wenigstens 2 ist, wie es mittels des Lösungsmittelfraktionierungsverfahrens bestimmt wird.

3. Cremefüllungszusammensetzung nach Anspruch 2, **dadurch gekennzeichnet, dass** sie umfasst:
- von 30 - 50 Gew.-% eine Lipidfraktion zusammengesetzt aus einem Pflanzenöl mit einem SFI von 0 bei Raumtemperatur, einer gesättigten Fettfraktion, welche zwischen 0 % und 5 % w/w der Gesamtlipidfraktion darstellt und einer teilweise hydrierten Fettfraktion, welche zwischen 0 % und 1 % w/w der Gesamtlipidfraktion darstellt;
- von 45 bis 65 Gew.-% eine Pulversüßstoffzusammensetzung;
- und von 3 bis 12 Gew.-% eine Weizenglutenfraktion umfassend eine Gliadin-reiche Fraktion, wobei das Gliadin/Glutenin-Verhältnis wenigstens 2 ist, wie es mittels des Lösungsmittelfraktionierungsverfahrens bestimmt wird.

4. Cremefüllungszusammensetzung nach einem der vorausgehenden Ansprüche, **dadurch gekennzeichnet, dass** die Pulversüßstoffzusammensetzung einen oder mehrere Süßstoffe auf Kohlenhydratbasis umfasst.

5. Cremefüllungszusammensetzung nach einem der Ansprüche 1 bis 3, **dadurch gekennzeichnet, dass** die Pulversüßstoffzusammensetzung einen oder mehrere Süßstoffe mit hoher Intensität umfasst.

6. Cremefüllungszusammensetzung nach einem der Ansprüche 1 bis 3, **dadurch gekennzeichnet, dass** die Pulversüßstoffzusammensetzung eine Kombination aus einem oder mehreren Süßstoffen auf Kohlenhydratbasis und Süßstoffen mit hoher Intensität umfasst.

7. Cremefüllungszusammensetzung nach einem der Ansprüche 1 bis 6, **dadurch gekennzeichnet, dass** die Weizenglutenfraktion eine Gliadin-reiche Fraktion umfasst, wobei das Gliadin/Glutenin-Verhältnis wenigstens 2,5 ist, wie es mittels des Lösungsmittelfraktionierungsverfahrens bestimmt wird.

8. Cremefüllungszusammensetzung nach Anspruch 7, **dadurch gekennzeichnet, dass** die Weizenglutenfraktion eine Gliadin-reiche Fraktion umfasst, wobei das Gliadin/Glutenin-Verhältnis wenigstens 3 ist, wie es mittels des Lösungsmittelfraktionierungsverfahrens bestimmt wird.

9. Cremefüllungszusammensetzung nach einem der Ansprüche 1 bis 8, **dadurch gekennzeichnet, dass** die Weizenglutenfraktion mittels des folgenden Verfahrens erhalten wird:
das Gluten wird kontinuierlich oder nicht kontinuierlich in Wasser dispergiert bis zu einer Trockensubstanz, welche zwischen 5 und 30 % variiert, wobei
• der pH-Wert der Dispersion zwischen 4,4 und 4,8 überwacht wird, und
• das Gluten-Wasser-Gemisch Schereinflüssen unterzogen wird, durch welche die Dispersion, kontinuierlich oder nicht kontinuierlich, in Gliadin- und Glutenin-reiche Fraktionen fraktioniert werden kann, wodurch eine einzelne Gliadin-reiche Fraktion mit einem Gliadin/Glutenin-Verhältnis von wenigstens 2,5 erhalten wird, und eine einzelne Glutenin-reiche Fraktion mit einem Gliadin/Glutenin-Verhältnis von weniger als 0,8 erhalten wird.

10. Verfahren zur Herstellung einer Cremefüllungszusammensetzung nach einem der vorausgehenden Ansprüche, **dadurch gekennzeichnet, dass** die Cremefüllungszusammensetzung chargenweise hergestellt wird.

11. Verfahren nach Anspruch 10, **dadurch gekennzeichnet, dass** die chargenweise Präparation durchgeführt wird durch anfängliches Mischen der Gliadin-reichen Fraktion mit dem Pulversüßstoff und anschließendem Zugeben von Öl unter kontinuierlichem Mischen, bis eine homogene viskose Creme erhalten wird.

12. Verfahren nach Anspruch 10, **dadurch gekennzeichnet, dass** die chargenweise Präparation durchgeführt wird durch anfängliches Mischen der Gliadin-reichen Fraktion mit dem Öl und anschließendem Zugeben des Pulversüßstoffs unter Mischen bis zur Homogenität.

13. Verfahren zur Herstellung einer Cremefüllungszusammensetzung nach einem der Ansprüche 1 bis 9, **dadurch gekennzeichnet, dass** die Cremefüllungszusammensetzung auf kontinuierliche Art hergestellt wird.

14. Verfahren nach Anspruch 13, **dadurch gekennzeichnet, dass** die kontinuierliche Präparation durch kontinuierliches Dosieren des Pulversüßstoffs, der Gliadin-reichen Fraktion und des Öls in eine kontinuierlich betriebene Mischungseinheit durchgeführt wird.

15. Nahrungsmittelzusammensetzungen umfassend eine Cremefüllungszusammensetzung nach einem der Ansprüche 1 bis 9.

## Revendications

1. Composition de remplissage de crème, **caractérisée en ce qu'**elle comprend:
- une fraction lipidique composée d'une huile végétale présentant une valeur SFI égale à 0 à la température ambiante, une fraction de graisses saturées qui représente entre 0 % et 5 % en poids de la fraction lipidique totale, et une fraction de graisses partiellement hydrogénées qui représente entre 0 % et 1 % en poids de la fraction lipidique totale;
- une composition d'édulcorant en poudre; et
- une fraction de gluten de froment comprenant une fraction riche en gliadine, dans laquelle le rapport gliadine - glutenine est d'au moins 2, déterminé au moyen du procédé de fractionnement par solvant.

2. Composition de remplissage de crème selon la revendication 1, **caractérisée en ce qu'**elle comprend:
- de 25 % à 60 % en poids d'une fraction lipidique composée d'une huile végétale présentant une valeur SFI égale à 0 la température ambiante, une fraction de graisses saturées qui représente entre 0 % et 5 % en poids de la fraction lipidique totale, et une fraction de graisses partiellement hydrogénées qui représente entre 0 % et 1 % en poids de la fraction lipidique totale;
- de 40 % à 70 % en poids d'une composition d'édulcorant en poudre; et
- de 1 % à 15 % en poids d'une fraction de gluten de froment comprenant une fraction riche en gliadine, dans laquelle le rapport gliadine - glutenine est d'au moins 2, déterminé au moyen du procédé de fractionnement par solvant.

3. Composition de remplissage de crème selon la revendication 2, **caractérisée en ce qu'**elle comprend:
- de 30 % à 50 % en poids d'une fraction lipidique composée d'une huile végétale présentant une valeur SFI égale à 0 la température ambiante, une fraction de graisses saturées qui représente entre 0 % et 5 % en poids de la fraction lipidique totale, et une fraction de graisses partiellement hydrogénées qui représente entre 0 % et 1 % en poids de la fraction lipidique totale;
- de 45 % à 65 % en poids d'une composition d'édulcorant en poudre; et
- de 3 % à 12 % en poids d'une fraction de gluten de froment comprenant une fraction riche en gliadine, dans laquelle le rapport gliadine - glutenine est d'au moins 2, déterminé au moyen du procédé de fractionnement par solvant.

4. Composition de remplissage de crème selon l'une quelconque des revendications précédentes, **caractérisée en ce que** la composition d'édulcorant en poudre comprend un ou plusieurs édulcorant(s) à base de glucide.

5. Composition de remplissage de crème selon l'une quelconque des revendications 1 à 3, **caractérisée en ce que** la composition d'édulcorant en poudre comprend un ou plusieurs édulcorant(s) à haute intensité.

6. Composition de remplissage de crème selon l'une quelconque des revendications 1 à 3, **caractérisée en ce que** la composition d'édulcorant en poudre comprend une combinaison d'un ou de plusieurs édulcorant(s) à base de glucide et édulcorant(s) à haute intensité.

7. Composition de remplissage de crème selon l'une quelconque des revendications 1 à 6, **caractérisée en ce que** la fraction de gluten de froment comprend une fraction riche en gliadine, dans laquelle le rapport gliadine - glutenine est d'au moins 2,5, déterminé au moyen du procédé de fractionnement par solvant.

8. Composition de remplissage de crème selon l'une quelconque des revendications 1 à 7, **caractérisée en ce que** la fraction de gluten de froment comprend une fraction riche en gliadine, dans laquelle le rapport gliadine - glutenine est d'au moins 3, déterminé au moyen du procédé de fractionnement par solvant.

9. Composition de remplissage de crème selon l'une quelconque des revendications 1 à 8, **caractérisée en ce que** la fraction de gluten de froment est obtenue en exécutant le procédé suivant:
les glutens sont dispersés de façon continue ou non dans de l'eau jusqu'à obtenir une substance sèche qui varie entre 5 % et 30 %, dans laquelle:
- le pH de la dispersion est surveillé entre 4,4 et 4,8; et
- le mélange gluten - eau est soumis à des actions de cisaillement,
par lesquelles la dispersion, de façon continue ou non, peut être fractionnée en fractions riches en gliadine et riches en glutenine, dans lesquelles on obtient une seule fraction riche en gliadine avec un rapport gliadine - glutenine d'au moins 2,5, et une seule fraction riche en glutenine avec un rapport gliadine - glutenine inférieur à 0,8.

10. Procédé de préparation d'une composition selon l'une quelconque des revendications précédentes, **caractérisé en ce que** la composition de remplissage de crème est préparée de façon discontinue.

11. Procédé selon la revendication 10, **caractérisé en ce que** la préparation discontinue est exécutée en mélangeant d'abord la fraction riche en gliadine avec l'édulcorant en poudre, et en ajoutant ensuite l'huile tout en mélangeant de façon continue jusqu'à ce que l'on obtienne une crème visqueuse homogène.

12. Procédé selon la revendication 10, **caractérisé en ce que** la préparation discontinue est exécutée en mélangeant d'abord la fraction riche en gliadine avec l'huile et en ajoutant ensuite l'édulcorant en poudre tout en mélangeant jusqu'à obtenir une préparation homogène.

13. Procédé de préparation d'une composition de remplissage de crème selon l'une quelconque des revendications 1 à 9, **caractérisé en ce que** la composition de remplissage de crème est préparée de façon continue.

14. Procédé selon la revendication 13, **caractérisé en ce que** la préparation continue est exécutée en dosant de façon continue l'édulcorant en poudre, la fraction riche en gliadine et l'huile dans une unité de mélange en continu.

15. Composition alimentaire comprenant une composition de remplissage de crème selon l'une quelconque des revendications 1 à 9.
